# EUROPEAN PATENT APPLICATION

(11) **EP 4 800 790 A1**
(43) Date of publication of application: **02.09.2026**
(21) Application number: 24900606.5
(22) Date of filing: 03.12.2024
(51) Int. Cl.: H01M 10/052, H01M 4/136, H01M 4/58, H01M 10/054, H01M 10/0567

(54) **NON-AQUEOUS ELECTROLYTIC SOLUTION FOR NON-AQUEOUS ELECTROLYTIC SOLUTION BATTERY, AND NON-AQUEOUS ELECTROLYTIC SOLUTION BATTERY**

(30) Priority: 07.12.2023 JP 2023206961
(71) Applicant: Central Glass Company, Limited, Ube-shi, Yamaguchi 755-0001 (JP)
(72) Inventor: ITABASHI Saori, Tokyo 101-0054 (JP); MORI Toshiki, Tokyo 101-0054 (JP)
(74) Representative: Manitz Finsterwald Patent- und Rechtsanwaltspartnerschaft mbB
(86) International application number: PCT/JP2024/042684
(87) International publication number: WO 2025/121312

(57) **Abstract**

A non-aqueous electrolytic solution for a non-aqueous electrolytic solution battery with a positive electrode containing a positive electrode active material having an olivine structure includes an electrolyte and an additive different from the electrolyte. The additive is a compound represented by the following general formula (1). A concentration of the additive relative to a total amount of the non-aqueous electrolytic solution is greater than 1% by mass.

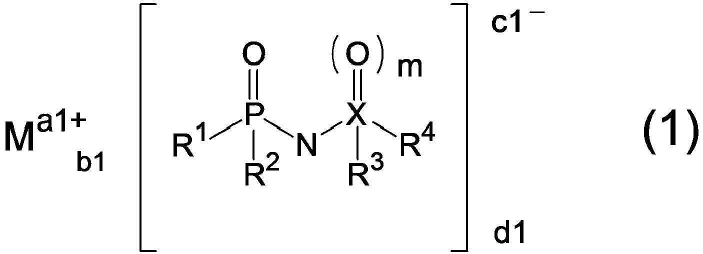

## Description

### TECHNICAL FIELD

One embodiment of the present disclosure relates to a non-aqueous electrolytic solution for a non-aqueous electrolytic solution battery. Further, one embodiment of the present disclosure relates to a non-aqueous electrolytic solution battery.

### BACKGROUND ART

A non-aqueous electrolytic solution battery is used in a wide range of applications. In particular, since a lithium ion secondary battery, which is a type of non-aqueous electrolytic solution battery, is small and lightweight, it is used as a power source for a portable electronic device such as a mobile phone, a smartphone, and a laptop computer. In recent years, a lithium iron phosphate compound (LiFePO₄) with an olivine structure has attracted attention from the perspective of safety and cost reduction in a non-aqueous electrolytic solution battery_{.} However, in a non-aqueous electrolytic solution battery using LiFePO₄ as a positive electrode active material, there is a problem in that iron contained in the positive electrode active material dissolves into the non-aqueous electrolytic solution and is reduced and precipitated on a negative electrode. In this case, the layered structure of the positive electrode active material changes, so that the capacity of the non-aqueous electrolytic solution battery decreases. Further, the deposition of iron on the negative electrode causes an increase in interfacial resistance. Therefore, various methods have been attempted to suppress the dissolution of iron in a non-aqueous electrolytic solution battery using a positive electrode active material containing an iron compound (Patent Literatures 1 to 4).

### CITATION LIST

### PATENT LITERATURE

Patent Literature 1: Japanese patent No. 5141582
Patent Literature 2: Japanese patent No. 5678539
Patent Literature 3: Japanese patent No. 4423888
Patent Literature 4: Japanese laid-open patent publication No. 2009-004357

### SUMMARY OF INVENTION

### TECHNICAL PROBLEM

One object of an embodiment of the present disclosure is to provide a non-aqueous electrolytic solution battery with a positive electrode containing a positive electrode active material having an olivine structure, in which iron deposition is suppressed. Another object of an embodiment of the present disclosure is to provide a non-aqueous electrolytic solution battery with a positive electrode containing a positive electrode active material having an olivine structure, in which iron deposition is suppressed.

### SOLUTION TO PROBLEM

A non-aqueous electrolytic solution for a non-aqueous electrolytic solution battery according to an embodiment of the present disclosure is a non-aqueous electrolytic solution for a non-aqueous electrolytic solution battery with a positive electrode containing a positive electrode active material having an olivine structure including an electrolyte and an additive different from the electrolyte. The additive is a compound represented by the following general formula (1). A concentration of the additive relative to a total amount of the non-aqueous electrolytic solution is greater than 1% by mass. 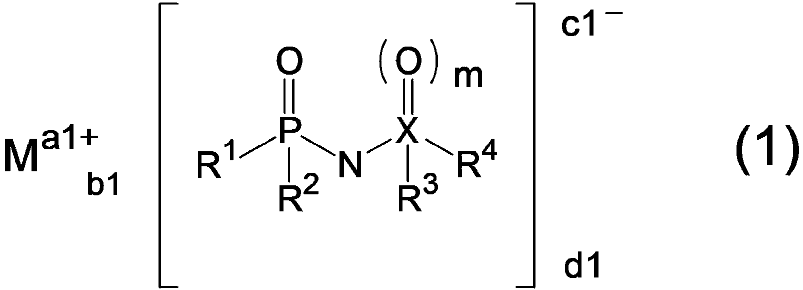 [In the general formula (1), M^{a1+} is an alkali metal cation, an alkaline earth metal cation, or an onium cation, and a1 represents an integer equal to the valency of the corresponding cation. a1 to d1 represent integers from 1 to 2, and satisfy a1 × b1 = c1 × d1. X is a sulfur atom or a phosphorus atom, m is 2 and R⁴ is not present if X is the sulfur atom, and m is 1 if X is the phosphorus atom. R1 to R4 are organic groups each independently selected from a fluorine atom, an oxygen atom, an alkyl group having 1 to 10 carbon atoms, an alkoxy group having 1 to 10 carbon atoms, an alkenyl group having 2 to 10 carbon atoms, an alkenyloxy group having 2 to 10 carbon atoms, an alkynyl group having 2 to 10 carbon atoms, an alkynyloxy group having 2 to 10 carbon atoms, a cycloalkyl group having 3 to 10 carbon atoms, a cycloalkoxy group having 3 to 10 carbon atoms, a cycloalkenyl group having 3 to 10 carbon atoms, a cycloalkenyloxy group having 3 to 10 carbon atoms, an aryl group having 6 to 10 carbon atoms, and an aryloxy group having 6 to 10 carbon atoms, and a fluorine atom, an oxygen atom, or an unsaturated bond can also be present in the organic groups.]

In the non-aqueous electrolytic solution, the concentration of the additive relative to the total amount of the non-aqueous electrolytic solution may be less than or equal to 5% by mass.

In the non-aqueous electrolytic solution, the positive electrode active material having the olivine structure may be lithium iron phosphate, lithium iron manganese phosphate, sodium iron phosphate, or sodium iron manganese phosphate.

In the non-aqueous electrolytic solution, the additive may be at least one selected from the group consisting of a (difluorophosphoryl)(fluorosulfonyl)imide salt and a bis(difluorophosphoryl)imide salt.

A non-aqueous electrolytic solution battery according to an embodiment of the present disclosure includes a positive electrode containing a positive electrode active material having an olivine structure, a negative electrode, a separator between the positive electrode and the negative electrode, and a non-aqueous electrolytic solution containing an electrolyte and an additive different from the electrolyte. The additive is a compound represented by the following general formula (1). A concentration of the additive relative to a total amount of the non-aqueous electrolytic solution is greater than 1% by mass. 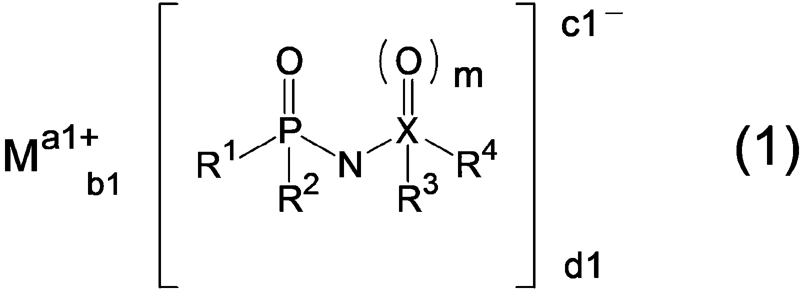 [In the general formula (1), M^{a1+} is an alkali metal cation, an alkaline earth metal cation, or an onium cation, and a1 represents an integer equal to the valency of the corresponding cation. a1 to d1 represent integers from 1 to 2, and satisfy a1 × b1 = c1 × d1. X is a sulfur atom or a phosphorus atom, m is 2 and R⁴ is not present if X is the sulfur atom, and m is 1 if X is the phosphorus atom. R1 to R4 are organic groups each independently selected from a fluorine atom, an oxygen atom, an alkyl group having 1 to 10 carbon atoms, an alkoxy group having 1 to 10 carbon atoms, an alkenyl group having 2 to 10 carbon atoms, an alkenyloxy group having 2 to 10 carbon atoms, an alkynyl group having 2 to 10 carbon atoms, an alkynyloxy group having 2 to 10 carbon atoms, a cycloalkyl group having 3 to 10 carbon atoms, a cycloalkoxy group having 3 to 10 carbon atoms, a cycloalkenyl group having 3 to 10 carbon atoms, a cycloalkenyloxy group having 3 to 10 carbon atoms, an aryl group having 6 to 10 carbon atoms, and an aryloxy group having 6 to 10 carbon atoms, and a fluorine atom, an oxygen atom, or an unsaturated bond can also be present in the organic groups.]

In the non-aqueous electrolytic solution battery, the concentration of the additive relative to the total amount of the non-aqueous electrolytic solution may be less than or equal to 5% by mass.

In the non-aqueous electrolytic solution battery, the positive electrode active material having the olivine structure may be lithium iron phosphate, lithium manganese iron phosphate, sodium iron phosphate, or sodium manganese iron phosphate.

In the non-aqueous electrolytic solution battery, the additive may be at least one selected from the group consisting of a (difluorophosphoryl)(fluorosulfonyl)imide salt and a bis(difluorophosphoryl)imide salt.

### ADVANTAGEOUS EFFECTS OF INVENTION

In a non-aqueous electrolytic solution battery using a non-aqueous electrolytic solution according to an embodiment of the present disclosure, iron deposition is suppressed. As a result, the charge-discharge cycle characteristics of the non-aqueous electrolytic solution battery are improved.

### DESCRIPTION OF EMBODIMENTS

An embodiment of the present disclosure is described below. However, the present disclosure can be implemented in various forms without departing from its gist, and is not to be construed as being limited to the embodiments described below.

### <1. Configuration of Non-aqueous Electrolytic Solution Battery>

In an embodiment of the present disclosure, a non-aqueous electrolytic solution battery includes a positive electrode, a negative electrode, a separator, a non-aqueous electrolytic solution, and an outer package. When the non-aqueous electrolytic solution battery is a lithium-ion battery, it can be charged and discharged by the movement of lithium ions from the positive electrode to the negative electrode, or from the negative electrode to the positive electrode. Further, when the non-aqueous electrolytic solution battery is a sodium-ion battery, it can be charged and discharged by the movement of sodium ions from the positive electrode to the negative electrode, or from the negative electrode to the positive electrode. Although the non-aqueous electrolytic solution battery has a structure in which an electrode element in which the positive electrode and the negative electrode are arranged so as to face each other with a separator interposed therebetween, and the non-aqueous electrolytic solution is enclosed in the outer package, for example, the structure of the non-aqueous electrolytic solution battery is not limited thereto. Although the shape of the non-aqueous electrolytic solution battery has a coin shape, a cylindrical shape, a horn shape, or a sheet shape, for example, the shape of the non-aqueous electrolytic solution battery is not limited thereto. Hereinafter, the components of the non-aqueous electrolytic solution battery, namely the positive electrode, the negative electrode, the separator, the non-aqueous electrolytic solution, and the outer package, are described in detail.

### <1-1. Positive Electrode>

The positive electrode includes a positive electrode active material, a conductive additive, a binder, and a positive electrode current collector. The positive electrode is fabricated to mix the positive electrode active material, the conductive additive, and the binder, and prepare a slurry or paste by adding an organic solvent such as N-methylpyrrolidone (hereinafter, may be referred to as "NMP") to the mixture, and then, to apply the prepared slurry or paste to one or both sides of the positive electrode current collector and dry it. That is, in the positive electrode, a structure including the positive electrode active material, the conductive additive, and the binder is formed on at least one side of the positive electrode current collector. For example, the mixture ratio of the positive electrode active material, the conductive additive, and the binder is 80% to 99% by mass of the positive electrode active material, 1% to 10% by mass of the conductive additive, and 1% to 10% by mass of the binder.

In the case of a lithium-ion battery, lithium iron phosphate (hereinafter, may be referred to as "LiFePO₄" or "LFP") or lithium manganese iron phosphate (hereinafter, may be referred to as "LiₓMn_{1-y}Fe_{y}PO₄, 0 < x ≤ 1, 0 < y ≤ 1, or "LMFP") can be used as the positive electrode active material having an olivine structure. In the case of a sodium-ion battery, sodium iron phosphate or sodium manganese iron phosphate can be used as the positive electrode active material having an olivine structure.

Further, the positive electrode active material having an olivine structure may also be the above-described lithium iron phosphate, lithium manganese iron phosphate, sodium iron phosphate, and sodium manganese iron phosphate which contain metallic elements other than iron and manganese. Examples of such metallic elements include cobalt, nickel, aluminum, vanadium, and titanium.

Although described in detail later, when the non-aqueous electrolytic solution according to the embodiment of the present disclosure is used, the elution of iron contained in the positive electrode is suppressed, and therefore the amount of iron deposited on the negative electrode and the separator is also suppressed.

The conductive additive can improve the electronic conductivity between the positive electrode active materials. Examples of the conductive additive include a carbon material such as graphite, carbon nanotubes, Ketjenblack, or acetylene black.

The binder can bind the positive electrode active materials. For example, polyvinylidene fluoride (hereinafter, may be referred to as "PVDF"), polytetrafluoroethylene (hereinafter, may be referred to as "PTFE"), styrenebutadiene rubber (hereinafter, may be referred to as "SBR"), carboxymethylcellulose (hereinafter, may be referred to as "CMC"), and polyvinylpyrrolidone (hereinafter, may be referred to as "PVP") can be used as the binder.

For example, aluminum, titanium, or alloys thereof, or stainless steel can be used as the positive electrode current collector. Although the shape of the positive electrode current collector is a plate shape or a foil shape, the shape of the positive electrode current collector is not limited thereto.

### <1-2. Negative Electrode>

The negative electrode includes a negative electrode active material, a binder, and a negative electrode current collector. The negative electrode is fabricated to mix the negative electrode active material and the binder, and prepare a slurry or paste by adding an organic solvent such as NMP to the mixture, and then to apply the prepared slurry or paste to one or both sides of the negative electrode current collector and dry it. That is, in the negative electrode, a structure including the negative electrode active material and the binder is formed on at least one side of the negative electrode current collector. For example, the mixture ratio of the negative electrode active material and the binder is, for example, 80% to 99% by mass of the negative electrode active material and 1% to 20% by mass of the binder.

For example, lithium, alloys or oxides of lithium with other elements, silicon (elemental), silicon oxide, or carbon materials, or compounds or mixtures thereof can be used as the negative electrode active material. For example, other elements in alloys or oxides include silicon, tin, zinc, lead, or antimony. For example, carbon materials include graphite (natural graphite or artificial graphite), carbon nanotubes, non-graphitizable carbon, or easily graphitizable carbon. The negative electrode active material is not limited to these materials, and can be any material that can intercept or release lithium ions. Although the shape of the negative electrode active material is a fibrous shape, a spherical shape, a granular shape, or a scaly shape, for example, the shape of the negative electrode active material is not limited thereto.

The same material as the binder used for the positive electrode can be used as the binder for the negative electrode.

For example, copper, nickel, titanium, or alloys thereof, or stainless steel can be used as the negative electrode current collector. Although the shape of the negative electrode current collector is a plate shape or a foil shape, the shape of the negative electrode current collector is not limited thereto.

In addition, the negative electrode may contain a conductive additive. The same material as the conductive additive used for the positive electrode can be used for the negative electrode.

### <1-3. Separator>

The separator is a film that electrically insulates the positive and negative electrodes and allows lithium ions to pass through. A nonwoven fabric or porous film made of polyethylene (hereinafter, may be referred to as "PE") or polyolefin such as polypropylene (hereinafter, may be referred to as "PP"), cellulose, paper, or glass fiber can be used as the separator. The separator is preferably microporous so that ions can easily pass through by immersing the non-aqueous electrolytic solution.

For example, the separator using polyolefin is a microporous polymer film such as a porous polyolefin film. For example, the porous polyolefin film may be a single-layer film using only a porous polyethylene film, or a multi-layer film in which a porous polyethylene film and a porous polypropylene film are laminated.

### <1-4. Non-aqueous Electrolytic Solution>

The non-aqueous electrolytic solution includes a non-aqueous solvent, an electrolyte, and an additive. The non-aqueous electrolytic solution is prepared by dissolving an electrolyte and an additive in a non-aqueous solvent.

For example, cyclic carbonates such as propylene carbonate, ethylene carbonate, and butylene carbonate, linear carbonates such as diethyl carbonate, dimethyl carbonate, and ethyl methyl carbonate, cyclic esters such as γ-butyrolactone and γ-valerolactone, linear esters such as methyl acetate and methyl propionate, cyclic ethers such as tetrahydrofuran, 2-methyltetrahydrofuran, and dioxane, linear ethers such as dimethoxyethane and diethyl ether, or sulfone compounds or sulfoxide compounds such as dimethyl sulfoxide and sulfolane can be used as the non-aqueous solvent. In the embodiments of the present disclosure, one type of non-aqueous solvent may be used as the non-aqueous electrolytic solution, or two or more types of non-aqueous solvents may be mixed and used. From the viewpoint of electrochemical stability and chemical stability in oxidation-reduction reactions, it is preferable that propylene carbonate (hereinafter, may be referred to as "PC"), ethylene carbonate (hereinafter, may be referred to as "EC"), diethyl carbonate (hereinafter, may be referred to as "DEC"), dimethyl carbonate (hereinafter, may be referred to as "DMC"), or ethyl methyl carbonate (hereinafter, may be referred to as "EMC") is used as the above described non-aqueous solvent.

In the case of a lithium-ion battery, LiBF₄, LiPF₄, or LiN(SO₂F)₂ can be used as the electrolyte. From the viewpoint of heat resistance, although it is preferable to use the above-described electrolyte, other electrolytes such as LiClO₄, LiAsF₄, LiSbF₄, LiCF₃SO₃, LiCF₃CO₂, Li₂C₂F₄(SO₃)₂, LiN(CF₃SO₂)₂, LiC(CF₃SO₂)₃, LiCₙF₂ₙ₊₁SO₃ (2 ≦ n ≦ 7), or LiN(RfOSO₂)₂ (where Rf is a fluoroalkyl group) can also be used as the electrolyte. Further, in the case of a sodium-ion battery, NaBF₄, NaPF₄, or NaN(SO₂F)₂ can be used as the electrolyte. From the viewpoint of heat resistance, although it is preferable to use the above-described electrolyte, other electrolytes such as NaClO₄, NaAsF₄, NaSbF₄, NaCF₃SO₃, NaCF₃CO₂, Na₂C₂F₄(SO₃)₂, NaN(CF₃SO₂)₂, NaC(CF₃SO₂)₃, NaCₙF₂ₙ₊₁SO₃ (2 ≦ n ≦ 7), or NaN(RfOSO₂)₂ (where Rf is a fluoroalkyl group) can also be used as the electrolyte.

The total concentration of the electrolytes in the non-aqueous electrolytic solution may be greater than or equal to 0.6 mol/L and less than or equal to 1.8 mol/L, preferably greater than or equal to 0.6 mol/L and less than or equal to 1.6 mol/L, and more preferably greater than or equal to 0.9 mol/L and less than or equal to 1.6 mol/L.

The additive is a compound represented by the following general formula (1).

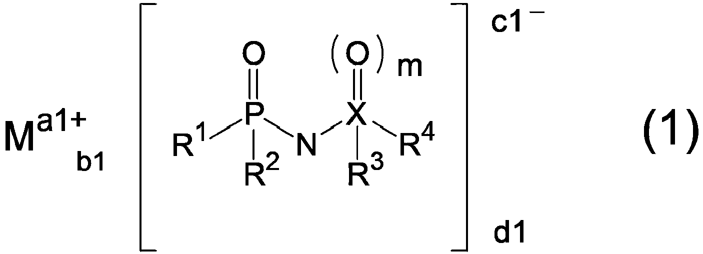

An example of an alkali metal cation represented by M^{a1+} in the general formula (1) includes a lithium ion, a sodium ion, a potassium ion, a rubidium ion, or a cesium ion. An example of an alkaline earth metal cation represented by M^{a1+} includes a magnesium ion, a calcium ion, or a barium ion.

An example of an onium cation represented by M^{a1+} in the general formula (1) includes tetraalkylammonium, tetraalkylphosphonium, or imidazolium derivatives. a1 represents the valency of the cation and may be 1 or 2.

From the viewpoint of particularly assisting ion conduction in the non-aqueous electrolytic solution battery, Ma¹⁺ is preferably a lithium ion, a sodium ion, a potassium ion, a tetramethylammonium ion, a tetraethylammonium ion, or a tetrabutylphosphonium ion. Further, Ma¹⁺ is more preferably a lithium ion in the case of a lithium-ion battery, and more preferably a sodium ion in the case of a sodium-ion battery.

Although specific examples of the anionic structure of the compound represented by the general formula (1) are shown below, the general formula (1) is not limited to these examples.

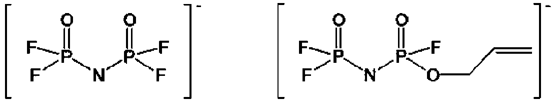

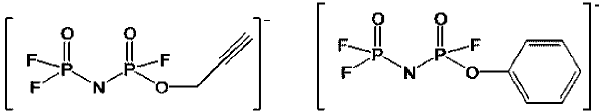

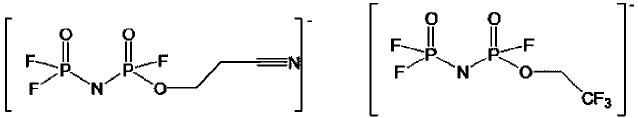

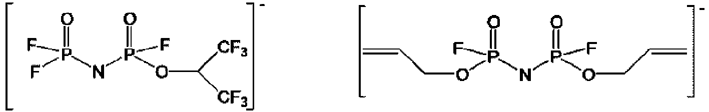

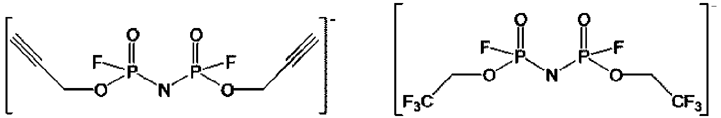

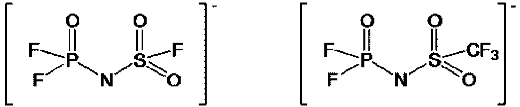

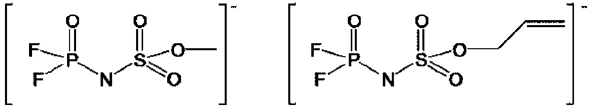

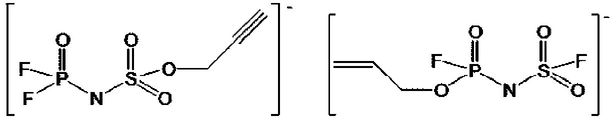

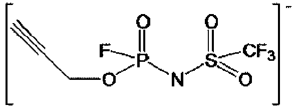

In the general formula (1), it is preferable that R1 to R4 are all fluorine atoms. That is, the additive is preferably at least one selected from the group consisting of a (difluorophosphoryl)(fluorosulfonyl)imide salt and a bis(difluorophosphoryl)imide salt.

In the case of a lithium-ion battery, at least one selected from the group consisting of (difluorophosphoryl)(fluorosulfonyl)imide lithium and bis(difluorophosphoryl)imide lithium is preferable, and (difluorophosphoryl)(fluorosulfonyl)imide lithium is more preferable. In the case of a sodium-ion battery, at least one selected from the group consisting of (difluorophosphoryl)(fluorosulfonyl)imide sodium and bis(difluorophosphoryl)imide sodium is preferred, and (difluorophosphoryl)(fluorosulfonyl)imide sodium is more preferable.

The concentration of the additive is greater than 1.0% by mass relative to the total amount of the non-aqueous electrolytic solution. Further, the concentration of the additive may be less than or equal to 5.0% by mass relative to the total amount of the non-aqueous electrolytic solution. The concentration of the additive is preferably greater than 1.0% by mass and less than or equal to 3.0% by mass, and more preferably greater than 1.0% by mass and less than or equal to 2.0% by mass. In the embodiment of the present disclosure, when a compound represented by general formula (1) as an additive is added to the non-aqueous electrolytic solution, the deposition of iron in the non-aqueous electrolytic solution battery can be suppressed, and as a result, the charge-discharge characteristics of the non-aqueous electrolytic solution battery can be improved. However, it is important that the concentration of the additive exceeds 1.0% by mass relative to the total amount of the non-aqueous electrolytic solution, and satisfying this condition further suppresses the deposition of iron. Further, when the concentration of the additive is less than or equal to 5.0% by mass relative to the total amount of the non-aqueous electrolytic solution, it is easier to suitably maintain the charge-discharge characteristics of the non-aqueous electrolytic solution battery. Therefore, it is preferable that the concentration of the additive in the non-aqueous electrolytic solution is within the above range.

### <1-5. Outer Package>

A metal can member with a coin shape, a cylindrical shape, or a rectangular shape, or a laminate film can be used as the outer package. Examples of the metal can member include iron, stainless steel, aluminum, nickel, titanium, or alloys thereof. The surface of the metal can member may be nickel-plated. Examples of the laminate film include aluminum laminate film, stainless steel laminate film, or silica-coated polyethylene or polypropylene laminate film.

As described above, in the embodiment of the present disclosure, when the compound represented by the general formula (1) as an additive is added to the non-aqueous electrolytic solution at a predetermined concentration, the deposition of iron can be suppressed in the non-aqueous electrolytic solution battery including the positive electrode containing iron, and as a result, the charge-discharge characteristics of the non-aqueous electrolytic solution battery can be improved. Although the detailed mechanism in the embodiment of the present disclosure is unknown, it is assumed that the elution of iron from the positive electrode is suppressed by the formation of a film on the positive electrode due to the additive. Further, the concentration of the additive is greater than 1.0% by mass relative to the total amount of the non-aqueous electrolytic solution in order to facilitate the formation of a film on the positive electrode.

The present disclosure is described in more detail below based on Examples. In addition, the Examples described below are not intended to limit the embodiment of the present disclosure.

### EXAMPLES

### <1. Examples 1 and 2 and Comparative Examples 1 to 3>

### <1-1. Fabrication of Non-aqueous Electrolytic Solution Battery>

### (1) Example 1

### (Preparation of Non-aqueous Electrolytic Solution)

LiPF₆ was dissolved in a mixed solvent with a volume ratio of EC:EMC = 3:7 to a concentration of 1 mol/L, and then (difluorophosphoryl)(fluorosulfonyl)imide lithium was further dissolved to obtain a non-aqueous electrolytic solution. In the non-aqueous electrolytic solution of Example 1, the concentration of (difluorophosphoryl)(fluorosulfonyl)imide lithium relative to the total amount of the non-aqueous electrolytic solution was 1.5% by mass.

### (Fabrication of Positive Electrode)

2% by mass of Acetylene black and 1% by mass of carbon nanotubes as conductive additives and 3% by mass of PVDF as a binder were mixed with 94% by mass of lithium iron phosphate powder, and then NMP was further added to obtain a slurry. This slurry was applied to an aluminum foil (one side) and dried at 150°C for 12 hours to form a layer containing the positive electrode active material (hereinafter, may be simply referred to as a "positive electrode active material layer") on the current collector, thereby obtaining the positive electrode of a non-aqueous electrolytic solution battery.

### (Fabrication of Negative Electrode)

10% by mass of PVDF as a binder was mixed with 90% by mass of graphite powder , and then NMP is further added to the mixture to obtain a slurry. This slurry was applied to a copper foil (one side) and dried at 150°C for 12 hours to form a layer containing the negative electrode active material (hereinafter, may be simply referred to as a "negative electrode active material layer") on the current collector, thereby obtaining the negative electrode of a non-aqueous electrolytic solution battery.

### (Fabrication of Non-aqueous Electrolytic Solution Battery)

Terminals were welded to the fabricated positive and negative electrodes. An electrode element was fabricated by sandwiching a cellulose separator between the positive and negative electrodes so that the positive and negative electrode active material layers faced each other. The electrode element was placed in an aluminum laminate bag with an opening on one side, and the non-aqueous electrolytic solution of Example 1 was vacuum-injected into the aluminum laminate bag, and then the opening was heat-sealed to fabricate the non-aqueous electrolytic solution battery of Example 1. The total area of the negative electrode (i.e., the total area corresponds to the area of the current collector in the part where the negative electrode active material layer is formed) is 20.25 cm² (= 4.5 cm × 4.5 cm). Further, the total area of the positive electrode (i.e., the total area corresponds to the area of the current collector in the part where the positive electrode active material layer is formed) is 16.0 cm² (= 4.0 cm × 4.0 cm).

### (2) Example 2

In the non-aqueous electrolytic solution of Example 2, the non-aqueous electrolytic solution was prepared such that the concentration of (difluorophosphoryl)(fluorosulfonyl)imide lithium relative to the total amount of the non-aqueous electrolytic solution was 2.0% by mass. Further, the non-aqueous electrolytic solution battery of Example 2 was fabricated using the same manufacturing method as in Example 1, except for using the non-aqueous electrolytic solution of Example 2.

### (3) Comparative Example 1

In the non-aqueous electrolytic solution of Comparative Example 1, (difluorophosphoryl)(fluorosulfonyl)imide lithium was not dissolved in the non-aqueous electrolytic solution. That is, the concentration of (difluorophosphoryl)(fluorosulfonyl)imide lithium relative to the total amount of the non-aqueous electrolytic solution was 0% by mass. Further, the non-aqueous electrolytic solution battery of Comparative Example 1 was fabricated using the same method as in Example 1, except for using the non-aqueous electrolytic solution of Comparative Example 1.

### (4) Comparative Example 2

In the non-aqueous electrolytic solution of Comparative Example 2, the non-aqueous electrolytic solution was prepared such that the concentration of (difluorophosphoryl)(fluorosulfonyl)imide lithium relative to the total amount of the non-aqueous electrolytic solution was 0.5% by mass. Further, the non-aqueous electrolytic solution battery of Comparative Example 2 was fabricated using the same manufacturing method as in Example 1, except for using the non-aqueous electrolytic solution of Comparative Example 2.

### (5) Comparative Example 3

In the non-aqueous electrolytic solution of Comparative Example 3, the non-aqueous electrolytic solution was prepared such that the concentration of (difluorophosphoryl)(fluorosulfonyl)imide lithium relative to the total amount of the non-aqueous electrolytic solution was 1.0% by mass. Further, the non-aqueous electrolytic solution battery of Comparative Example 3 was fabricated using the same manufacturing method as in Example 1, except for using the non-aqueous electrolytic solution of Comparative Example 3.

As described above, each of the non-aqueous electrolytic solution batteries of Examples 1 and 2 and Comparative Examples 1 to 3 contains lithium iron phosphate in the positive electrode. Further, the non-aqueous electrolytic solution batteries of Examples 1 and 2 and Comparative Examples 1 to 3 differ in the concentration of (difluorophosphoryl)(fluorosulfonyl)imide lithium added to the non-aqueous electrolytic solution.

### <1-2. Evaluation of Non-aqueous Electrolytic Solution Battery>

### (1) High-temperature Cycle Test

First, at an ambient temperature of 25°C, a constant current-constant voltage charge at 0.2 C was performed to reach 3.5 V, a constant current discharge was performed to reach 2.0 V, and then the non-aqueous electrolytic solution battery was left to stand for 3 hours. After that, 10 charge-discharge cycles were performed on the non-aqueous electrolytic solution battery at an ambient temperature of 25°C for an aging process of the non-aqueous electrolytic solution battery. In addition, as one cycle in the aging process, a constant current-constant voltage charge at 0.2 C was performed to reach 3.5 V, and then a constant current discharge at 1 C was performed to reach 2.0 V.

Next, a high-temperature cycle test of 200 cycles was performed on the non-aqueous electrolytic solution battery at an ambient temperature of 60°C. As one cycle in the high-temperature cycle test, a constant current-constant voltage charge at 3 C was performed to reach 3.5 V, and then a constant current discharge at 3 C was performed to reach 2.0 V. The discharge capacity retention rate of the non-aqueous electrolytic solution battery after the high-temperature cycle test was calculated to evaluate the degree of degradation of the non-aqueous electrolytic solution battery. The discharge capacity retention rate was calculated using the following formula.$\begin{matrix}Discharge capacity retention rate \left(%)\right) \\ = \left(Discharge capacity after 200 cycles/Discharge capacity after 1 cycle\right) \times 100\end{matrix}$

### (2) Evaluation of Iron Deposition

After the high-temperature cycle test, the non-aqueous electrolytic solution battery was disassembled, and the negative electrode and separator were immersed in EMC for one hour to remove any non-aqueous electrolytic solution adhering to them. Next, the cleaned negative electrode and separator were each immersed separately in an acidic solution for one hour to dissolve the iron deposited on the negative electrode and separator into their respective immersion solutions. After diluting the immersion solutions to a specified volume, the amount of iron in each of the immersion solutions was measured using inductively coupled plasma (ICP) emission spectrometry. Since the amount of iron measured by ICP emission spectrometry corresponds to the amount of iron deposited on the negative electrode or the separator, iron deposition can be evaluated after the high-temperature cycle test.

Table 1 shows the capacity retention rate and the amount of iron deposited only on the negative electrode in the high-temperature cycle test for each of the non-aqueous electrolytic solution batteries of Examples 1 and 2 and Comparative Examples 1 to 3. In addition, "concentration" in Tables 1 to 3 refers to the concentration of (difluorophosphoryl)(fluorosulfonyl)imide lithium, which is the additive in the non-aqueous electrolytic solution. Further, "amount of iron deposition per unit area of negative electrode" in Table 1 was calculated as the amount of iron deposition relative to the total area of the current collector in the part where the negative electrode active material layer was formed.

**[Table 1]**

| | Concentration (% by mass) | Capacity retention rate (%) | Amount of iron deposition (µg) | Amount of iron deposition per unit area of negative electrode (µg/cm²) |
|---|---|---|---|---|
| Example 1 | 1.5 | 79 | 3 | 0.1481 |
| Example 2 | 2.0 | 82 | 7 | 0.3457 |
| Comparative Example 1 | 0 | 61 | 74 | 3.654 |
| Comparative Example 2 | 0.5 | 73 | 15 | 0.7407 |
| Comparative Example 3 | 1.0 | 77 | 11 | 0.5432 |

As can be seen from Table 1, the amount of iron deposition per unit area of negative electrode in each of the non-aqueous electrolytic solution batteries of Examples 1 and 2 is less than or equal to 0.4 µg/cm². On the other hand, the amount of iron deposition per unit area of negative electrode in each of the non-aqueous electrolytic solution batteries of Comparative Examples 1 to 3 exceeds 0.4 µg/cm². Thus, it can be seen that iron deposition is suppressed in the non-aqueous electrolytic solution batteries of Examples 1 and 2. Further, the capacity retention rate of each of the non-aqueous electrolytic solution batteries of Examples 1 and 2 is higher than that of each of the non-aqueous electrolytic solution batteries of Comparative Examples 1 to 3. Thus, it is assumed that the charge and discharge characteristics of the non-aqueous electrolytic solution batteries of Examples 1 and 2 are improved due to the suppression of iron deposition.

Table 2 shows the results of measuring the capacity retention rate and the amount of iron deposited only on the separator in the high-temperature cycle test for each of the non-aqueous electrolytic solution batteries of Examples 1 and 2 and Comparative Examples 1 to 3. "Amount of iron deposition per unit area of separator" in Table 2 was calculated as the amount of iron deposition relative to the total area of the separator of 25 cm² (= 5 cm × 5 cm).

**[Table 2]**

| | Concentration (% by mass) | Capacity retention rate (%) | Amount of iron deposition (µg) | Amount of iron deposition per unit area of separator (µg/cm²) |
|---|---|---|---|---|
| Example 1 | 1.5 | 79 | 4 | 0.160 |
| Example 2 | 2.0 | 82 | 0 | 0 |
| Comparative Example 1 | 0 | 61 | 25 | 1.000 |
| Comparative Example 2 | 0.5 | 73 | 4 | 0.160 |
| Comparative Example 3 | 1.0 | 77 | 3 | 0.120 |

As can be seen from Table 2, less iron is deposited on the separators of the non-aqueous electrolytic solutions of Examples 1 and 2 than on the separators of the non-aqueous electrolytic solutions of Comparative Examples 1 to 3. In particular, no iron is deposited on the separator of the non-aqueous electrolytic solution battery of Example 2. In other words, in the non-aqueous electrolytic solution batteries of Examples 1 and 2, iron is less likely to be deposited on the separator, thus, it is assumed that the charge and discharge characteristics of the non-aqueous electrolytic solution batteries are improved.

Table 3 shows the capacity retention rate and the total amount of iron deposited on the negative electrode and separator in the high-temperature cycle test for each of the non-aqueous electrolytic solution batteries of Examples 1 and 2 and Comparative Examples 1 to 3. The total amount of deposition represents, that is, the amount of iron eluted from the positive electrode. Further, "amount of iron elution per unit area of positive electrode" in Table 3 was calculated as the amount of iron elution relative to the total area of the current collector in the part where the positive electrode active material layer was formed.

**[Table 3]**

| | Concentration (% by mass) | Capacity retention rate (%) | Total amount of iron deposition on negative electrode and separator = Amount of iron elution (µg) | Amount of iron elution per unit area of positive electrode (µg/cm²) |
|---|---|---|---|---|
| Example 1 | 1.5 | 79 | 7 | 0.4375 |
| Example 2 | 2.0 | 82 | 7 | 0.4375 |
| Comparative Example 1 | 0 | 61 | 99 | 6.1875 |
| Comparative Example 2 | 0.5 | 73 | 19 | 1.1875 |
| Comparative Example 3 | 1.0 | 77 | 14 | 0.8750 |

As can be seen from Table 3, the amount of iron elution per unit area of the positive electrode in each of the non-aqueous electrolytic solution batteries of Examples 1 and 2 is less than or equal to 0.5 µg/cm². On the other hand, the amount of iron elution per unit area of the positive electrode in each of the non-aqueous electrolytic solution batteries of Comparative Examples 1 to 3 exceeds 0.5 µg/cm². Thus, specifically, the amount of iron elution in each of the non-aqueous electrolytic solution batteries of Examples 1 and 2 is less than or equal to 1/10 of the amount of iron elution in the non-aqueous electrolytic solution battery of Comparative Example 1, which does not contain (difluorophosphoryl)(fluorosulfonyl)imide lithium. It can be seen that the iron elution itself is suppressed in the non-aqueous electrolytic solution batteries of Examples 1 and 2. Further, the capacity retention rate of each of the non-aqueous electrolytic solution batteries of Examples 1 and 2 is higher than that of each of the non-aqueous electrolytic solution batteries of Comparative Examples 1 to 3. Thus, in the non-aqueous electrolytic solution batteries of Examples 1 and 2, it is assumed that the charge and discharge characteristics are improved because iron elution itself is suppressed, resulting in the suppression of iron deposition on the negative electrode and separator.

### <2. Examples 3 and 4 and Comparative Examples 4 to 6>

### <2-1. Fabrication of Non-aqueous Electrolytic Solution Battery>

### (1) Example 3

LiPF₆ was dissolved in a mixed solvent with a volume ratio of EC:EMC = 3:7 to a concentration of 1 mol/L, and then bis(difluorophosphoryl)imide lithium was further dissolved to obtain a non-aqueous electrolytic solution. In the non-aqueous electrolytic solution of Example 3, the concentration of bis(difluorophosphoryl)imide lithium relative to the total amount of the non-aqueous electrolytic solution was 1.25% by mass.

### (2) Example 4

In the non-aqueous electrolytic solution of Example 4, the non-aqueous electrolytic solution was prepared such that the concentration of bis(difluorophosphoryl)imide lithium relative to the total amount of the non-aqueous electrolytic solution was 1.5% by mass. Further, the non-aqueous electrolytic solution battery of Example 4 was fabricated using the same manufacturing method as in Example 1, except for using the non-aqueous electrolytic solution of Example 4.

### (3) Comparative Example 4

In the non-aqueous electrolytic solution of Comparative Example 4, bis(difluorophosphoryl)imide lithium was not dissolved in the non-aqueous electrolytic solution. That is, the concentration of bis(difluorophosphoryl)imide lithium relative to the total amount of the non-aqueous electrolytic solution was 0% by mass. Further, the non-aqueous electrolytic solution battery of Comparative Example 4 was fabricated using the same method as in Example 1, except for using the non-aqueous electrolytic solution of Comparative Example 4.

### (4) Comparative Example 5

In the non-aqueous electrolytic solution of Comparative Example 5, the non-aqueous electrolytic solution was prepared such that the concentration of bis(difluorophosphoryl)imide lithium relative to the total amount of the non-aqueous electrolytic solution was 0.5% by mass. Further, the non-aqueous electrolytic solution battery of Comparative Example 5 was fabricated using the same manufacturing method as in Example 1, except for using the non-aqueous electrolytic solution of Comparative Example 5.

### (5) Comparative Example 6

In the non-aqueous electrolytic solution of Comparative Example 6, the non-aqueous electrolytic solution was prepared such that the concentration of bis(difluorophosphoryl)imide lithium relative to the total amount of the non-aqueous electrolytic solution was 1.0% by mass. Further, the non-aqueous electrolytic solution battery of Comparative Example 6 was fabricated using the same manufacturing method as in Example 1, except for using the non-aqueous electrolytic solution of Comparative Example 6.

As described above, each of the non-aqueous electrolytic solution batteries of Examples 3 and 4 and Comparative Examples 4 to 6 contains lithium iron phosphate in the positive electrode. Further, the non-aqueous electrolytic solution batteries of Examples 1 and 2 and Comparative Examples 1 to 3 differ in the concentration of bis(difluorophosphoryl)imide lithium added to the non-aqueous electrolytic solution.

### <2-2. Evaluation of Non-aqueous Electrolytic Solution Battery>

Table 4 shows the capacity retention rate and the amount of iron deposited only on the negative electrode in the high-temperature cycle test for each of the non-aqueous electrolytic solution batteries of Examples 3 and 4 and Comparative Examples 4 to 6. The conditions for the high-temperature cycle test and the iron deposition evaluation are the same as those described above. In addition, "concentration" in Tables 4 to 6 refers to the concentration of bis(difluorophosphoryl)imide lithium, which is the additive in the non-aqueous electrolytic solution.

**[Table 4]**

| | Concentration (% by mass) | Capacity retention rate (%) | Amount of iron deposition (µg) | Amount of iron deposition per unit area of negative electrode (µg/cm²) |
|---|---|---|---|---|
| Example 3 | 1.25 | 72 | 25 | 1.234 |
| Example 4 | 1.5 | 73 | 20 | 0.9875 |
| Comparative Example 4 | 0 | 61 | 74 | 3.6543 |
| Comparative Example 5 | 0.5 | 65 | 45 | 2.2222 |
| Comparative Example 6 | 1.0 | 68 | 36 | 1.7777 |

As can be seen from Table 4, even when the additive in the non-aqueous electrolytic solution is bis(difluorophosphoryl)imide lithium, the amount of iron deposition per unit area of the negative electrode decreases as the concentration of bis(difluorophosphoryl)imide lithium increases. The amount of iron deposition per unit area of the negative electrode in each of the non-aqueous electrolytic solution batteries of Examples 3 and 4 is less than or equal to 1.5 µg/cm². On the other hand, the amount of iron deposition per unit area of the negative electrode in each of the non-aqueous electrolytic solution batteries of Comparative Examples 4 to 6 exceeds 1.5 µg/cm². Further, the capacity retention rate of each of the non-aqueous electrolytic solution batteries of Examples 3 and 4 is higher than that of each of the non-aqueous electrolytic solution batteries of Comparative Examples 4 to 6. Thus, it is assumed that the charge-discharge characteristics of the non-aqueous electrolytic solution batteries of Examples 3 and 4 are improved due to the suppression of iron deposition.

Table 5 shows the results of measuring the capacity retention rate and the amount of iron deposited only on the separator in the high-temperature cycle test for each of the non-aqueous electrolytic solution batteries of Examples 3 and 4 and Comparative Examples 4 to 6.

**[Table 5]**

| | Concentration (% by mass) | Capacity retention rate (%) | Amount of iron deposition (µg) | Amount of iron deposition per unit area of separator (µg/cm²) |
|---|---|---|---|---|
| Example 3 | 1.25 | 72 | 6 | 0.24 |
| Example 4 | 1.5 | 73 | 2 | 0.08 |
| Comparative Example 4 | 0 | 61 | 25 | 1 |
| Comparative Example 5 | 0.5 | 65 | 16 | 0.64 |
| Comparative Example 6 | 1.0 | 68 | 10 | 0.4 |

As can be seen from Table 5, less iron is deposited on the separators of the non-aqueous electrolytic solution batteries of Examples 3 and 4 than on the separators of the non-aqueous electrolytic solution batteries of Comparative Examples 4 to 6.

Table 6 shows the capacity retention rate and the total amount of iron deposited on the negative electrode and separator in the high-temperature cycle test for each of Examples 3 and 4 and Comparative Examples 4 to 6.

**[Table 6]**

| | Concentration (% by mass) | Capacity retention rate (%) | Total amount of iron deposition on negative electrode and separator = Amount of iron elution (µg) | Amount of iron elution per unit area of positive electrode (µg/cm²) |
|---|---|---|---|---|
| Example 3 | 1.25 | 72 | 31 | 1.978 |
| Example 4 | 1.5 | 73 | 22 | 1.375 |
| Comparative Example 4 | 0 | 61 | 99 | 6.188 |
| Comparative Example 5 | 0.5 | 65 | 61 | 3.813 |
| Comparative Example 6 | 1.0 | 68 | 46 | 2.875 |

As can be seen from Table 6, even when the additive in the non-aqueous electrolytic solution is bis(difluorophosphoryl)imide lithium, the amount of iron elution per unit area of the positive electrode decreases as the concentration of bis(difluorophosphoryl)imide lithium increases. The amount of iron elution per unit area of the positive electrode in each of the non-aqueous electrolytic solution batteries of Examples 3 and 4 is less than or equal to 2.5 µg/cm². On the other hand, the amount of iron elution per unit area of the positive electrode in each of the non-aqueous electrolytic solution batteries of Comparative Examples 4 to 6 exceeds 2.5 µg/cm². Specifically, the amount of iron elution in each of the non-aqueous electrolytic solution batteries of Examples 3 and 4 is less than or equal to 1/3 of the amount of iron elution in the non-aqueous electrolytic solution battery of Comparative Example 4, which does not contain bis(difluorophosphoryl)imide lithium. In the non-aqueous electrolytic solution batteries of Examples 3 and 4, it is assumed that the charge-discharge characteristics are improved because iron elution itself is suppressed, resulting in suppression of iron deposition on the negative electrode and separator.

### <3. Examples 5 to 7 and Comparative Examples 7 to 9>

### <3-1. Fabrication of Non-aqueous Electrolytic Solution Battery>

### (1) Example 5

In Example 5, the non-aqueous electrolytic solution was prepared such that the concentration of (difluorophosphoryl)(fluorosulfonyl)imide lithium relative to the total amount of the non-aqueous electrolytic solution was 1.25% by mass. Further, 3.9% by mass of carbon black and 0.1% by mass of carbon nanotubes as conductive additives and 3% by mass of PVDF as a binder were mixed with 93% by mass of lithium iron manganese phosphate powder, and then NMP was further added to obtain a slurry. This slurry was applied to an aluminum foil (one side) and dried at 150°C for 12 hours to form a positive electrode active material layer on the current collector, thereby obtaining the positive electrode of the non-aqueous electrolytic solution battery. Furthermore, the non-aqueous electrolytic solution battery of Example 5 was fabricated using the same method as in Example 1, except for using the non-aqueous electrolytic solution and positive electrode of Example 5.

### (2) Example 6

In the non-aqueous electrolytic solution of Example 6, the non-aqueous electrolytic solution was prepared such that the concentration of (difluorophosphoryl)(fluorosulfonyl)imide lithium relative to the total amount of the non-aqueous electrolytic solution was 1.5% by mass. Further, the non-aqueous electrolytic solution battery of Example 6 was fabricated using the same method as in Example 5, except for using the non-aqueous electrolytic solution of Example 6.

### (3) Example 7

In the non-aqueous electrolytic solution of Example 7, the non-aqueous electrolytic solution was prepared such that the concentration of (difluorophosphoryl)(fluorosulfonyl)imide lithium relative to the total amount of the non-aqueous electrolytic solution was 2.0% by mass. Further, the non-aqueous electrolytic solution battery of Example 7 was fabricated using the same method as in Example 5, except for using the non-aqueous electrolytic solution of Example 7.

### (4) Comparative Example 7

In the non-aqueous electrolytic solution of Comparative Example 7, (difluorophosphoryl)(fluorosulfonyl)imide lithium was not dissolved in the non-aqueous electrolytic solution. That is, the concentration of (difluorophosphoryl)(fluorosulfonyl)imide lithium relative to the total amount of the non-aqueous electrolytic solution was 0% by mass. Further, the non-aqueous electrolytic solution battery of Comparative Example 7 was fabricated using the same method as in Example 5, except using the non-aqueous electrolytic solution of Comparative Example 7.

### (5) Comparative Example 8

In the non-aqueous electrolytic solution of Comparative Example 8, the non-aqueous electrolytic solution was prepared such that the concentration of (difluorophosphoryl)(fluorosulfonyl)imide lithium relative to the total amount of the non-aqueous electrolytic solution was 0.5% by mass. Further, the non-aqueous electrolytic solution battery of Comparative Example 8 was fabricated using the same method as in Example 5, except for using the non-aqueous electrolytic solution of Comparative Example 8.

### (6) Comparative Example 9

In the non-aqueous electrolytic solution of Comparative Example 9, the non-aqueous electrolytic solution was prepared such that the concentration of (difluorophosphoryl)(fluorosulfonyl)imide lithium relative to the total amount of the non-aqueous electrolytic solution was 1.0% by mass. Further, the non-aqueous electrolytic solution battery of Comparative Example 9 was fabricated using the same method as in Example 5, except for using the non-aqueous electrolytic solution of Comparative Example 9.

As described above, each of the non-aqueous electrolytic solution batteries of Examples 5 to 7 and Comparative Examples 7 to 9 contains lithium manganese iron phosphate in the positive electrode. Further, the non-aqueous electrolytic solution batteries of Examples 5 to 7 and Comparative Examples 7 to 9 differ in the concentration of (difluorophosphoryl)(fluorosulfonyl)imide lithium added to the non-aqueous electrolytic solution.

### <3-2. Evaluation of Non-aqueous Electrolytic Solution Battery>

Table 7 shows the capacity retention rate and the amount of iron deposited only on the negative electrode in the high-temperature cycle test for each of the non-aqueous electrolytic solution batteries of Examples 5 to 7 and Comparative Examples 7 to 9. The conditions for the high-temperature cycle test and the iron deposition evaluation are the same as those described above. In addition, "concentration" in Tables 7 to 9 refers to the concentration of (difluorophosphoryl)(fluorosulfonyl)imide lithium, which is the additive in the non-aqueous electrolytic solution.

**[Table 7]**

| | Concentration (% by mass) | Capacity retention rate (%) | Amount of iron deposition (µg) | Amount of iron deposition per unit area of negative electrode (µg/cm²) |
|---|---|---|---|---|
| Example 5 | 1.25 | 78.9 | 15 | 0.741 |
| Example 6 | 1.5 | 79.3 | 9 | 0.444 |
| Example 7 | 2.0 | 80.5 | 3 | 0.148 |
| Comparative Example 7 | 0 | 64.5 | 65 | 3.310 |
| Comparative Example 8 | 0.5 | 72.5 | 44 | 1.679 |
| Comparative Example 9 | 1.0 | 77.8 | 29 | 1.432 |

As can be seen from Table 7, even when the positive electrode active material is lithium manganese iron phosphate, the amount of iron deposition per unit area of the negative electrode decreases as the concentration of (difluorophosphoryl)(fluorosulfonyl)imide lithium increases. The amount of iron deposition per unit area of the negative electrode in each of the non-aqueous electrolytic solution batteries of Examples 5 to 7 is less than or equal to 1.0 µg/cm². On the other hand, the amount of iron deposition per unit area of the negative electrode in each of the non-aqueous electrolytic solution batteries of Comparative Examples 7 to 9 exceeds 1.0 µg/cm². ·Further, the capacity retention rate of each of the non-aqueous electrolytic solution batteries of Examples 5 to 7 is higher than that of each of the non-aqueous electrolytic solution batteries of Comparative Examples 7 to 9. Thus, it is assumed that the charge-discharge characteristics of the non-aqueous electrolytic solution batteries of Examples 5 to 7 are improved due to the suppression of iron deposition.

Table 8 shows the results of measuring the capacity retention rate and the amount of iron deposited only on the separator in the high-temperature cycle test for each of the non-aqueous electrolytic solution batteries of Examples 5 to 7 and Comparative Examples 7 to 9.

**[Table 8]**

| | Concentration (% by mass) | Capacity retention rate (%) | Amount of iron deposition (µg) | Amount of iron deposition per unit area of separator (µg/cm²) |
|---|---|---|---|---|
| Example 5 | 1.25 | 78.9 | 7 | 0.28 |
| Example 6 | 1.5 | 79.3 | 4 | 0.16 |
| Example 7 | 2.0 | 80.5 | 1 | 0.04 |
| Comparative Example 7 | 0 | 64.5 | 22 | 0.88 |
| Comparative Example 8 | 0.5 | 72.5 | 14 | 0.56 |
| Comparative Example 9 | 1.0 | 77.8 | 10 | 0.4 |

As can be seen from Table 8, less iron is deposited on the separators of the non-aqueous electrolytic solution batteries of Examples 5 to 7 than on the separators of the non-aqueous electrolytic solution batteries of Comparative Examples 7 to 9.

Table 9 shows the capacity retention rate and the total amount of iron deposited on the negative electrode and separator in the high-temperature cycle test for each of Examples 3 and 4 and Comparative Examples 4 to 6.

**[Table 9]**

| | Concentration (% by mass) | Capacity retention rate (%) | Total amount of iron deposition on negative electrode and separator = Amount of iron elution (µg) | Amount of iron elution per unit area of positive electrode (µg/cm²) |
|---|---|---|---|---|
| Example 5 | 1.25 | 78.9 | 22 | 1.375 |
| Example 6 | 1.5 | 79.3 | 13 | 0.813 |
| Example 7 | 2.0 | 80.5 | 4 | 0.250 |
| Comparative Example 7 | 0 | 64.5 | 87 | 5.438 |
| Comparative Example 8 | 0.5 | 72.5 | 59 | 3.625 |
| Comparative Example 9 | 1.0 | 77.8 | 39 | 2.438 |

As can be seen from Table 9, even when the positive electrode active material is lithium manganese iron phosphate, the amount of iron deposition per unit area of the negative electrode decreases as the concentration of (difluorophosphoryl)(fluorosulfonyl)imide lithium increases. The amount of iron elution per unit area of the positive electrode in each of the non-aqueous electrolytic solution batteries of Examples 5 to 7 is less than or equal to 2.0 µg/cm². On the other hand, the amount of iron elution per unit area of the positive electrode in each of the non-aqueous electrolytic solution batteries of Comparative Examples 7 to 9 exceeds 2.0 µg/cm². Specifically, the amount of iron elution in each of the non-aqueous electrolytic solution batteries of Examples 5 to 7 is less than or equal to half the amount of iron elution in the non-aqueous electrolytic solution battery of Comparative Example 7, which does not contain bis(difluorophosphoryl)(fluorosulfonyl)imide lithium. In the non-aqueous electrolytic solution batteries of Examples 5 to 7, it is assumed that the charge-discharge characteristics are improved because iron elution itself is suppressed, resulting in suppression of iron deposition on the negative electrode and separator.

### <4. Examples 8 and 9 and Comparative Examples 10 to 12>

### <4-1. Fabrication of Non-aqueous Electrolytic Solution Battery>

### (1) Example 8

In the non-aqueous electrolytic solution of Example 8, the non-aqueous electrolytic solution was prepared such that the concentration of bis(difluorophosphoryl)imide lithium relative to the total amount of the non-aqueous electrolytic solution was 1.25% by mass. Further, the non-aqueous electrolytic solution battery of Example 8 was fabricated using the same method as in Example 5, except for using the non-aqueous electrolytic solution of Example 8.

### (2) Example 9

In the non-aqueous electrolytic solution of Example 9, the non-aqueous electrolytic solution was prepared such that the concentration of bis(difluorophosphoryl)imide lithium relative to the total amount of the non-aqueous electrolytic solution was 1.5% by mass. Further, the non-aqueous electrolytic solution battery of Example 9 was fabricated using the same method as in Example 5, except for using the non-aqueous electrolytic solution of Example 9.

### (3) Comparative Example 10

In the non-aqueous electrolytic solution of Comparative Example 10, bis(difluorophosphoryl)imide lithium was not dissolved in the non-aqueous electrolytic solution. That is, the concentration of bis(difluorophosphoryl)imide lithium relative to the total amount of non-aqueous electrolytic solution was 0% by mass. Further, the non-aqueous electrolytic solution battery of Comparative Example 10 was fabricated using the same method as in Example 5, except for using the non-aqueous electrolytic solution of Comparative Example 10.

### (4) Comparative Example 11

In the non-aqueous electrolytic solution of Comparative Example 11, the non-aqueous electrolytic solution was prepared such that the concentration of bis(difluorophosphoryl)imide lithium relative to the total amount of the non-aqueous electrolytic solution was 0.5% by mass. Further, the non-aqueous electrolytic solution battery of Comparative Example 11 was fabricated using the same method as in Example 5, except for using the non-aqueous electrolytic solution of Comparative Example 11.

### (5) Comparative Example 12

In the non-aqueous electrolytic solution of Comparative Example 12, the non-aqueous electrolytic solution was prepared such that the concentration of bis(difluorophosphoryl)imide lithium relative to the total amount of the non-aqueous electrolytic solution was 1.0% by mass. Further, the non-aqueous electrolytic solution battery of Comparative Example 12 was fabricated using the same method as in Example 5, except for using the non-aqueous electrolytic solution of Comparative Example 12.

As described above, each of the non-aqueous electrolytic solution batteries of Examples 8 and 9 and Comparative Examples 10 to 12 contains lithium manganese iron phosphate in the positive electrode. Further, the non-aqueous electrolytic solution batteries of Examples 8 and 9 and Comparative Examples 10 to 12 differ in the concentration of lithium bis(difluorophosphoryl)imide added to the non-aqueous electrolytic solution.

### <4-2. Evaluation of Non-aqueous Electrolytic Solution Battery>

Table 10 shows the capacity retention rate and the amount of iron deposited only on the negative electrode in the high-temperature cycle test for each of the non-aqueous electrolytic solution batteries of Examples 8 and 9 and Comparative Examples 10 to 12. The conditions for the high-temperature cycle test and the iron deposition evaluation are the same as those described above. In addition, "concentration" in Tables 10 to 12 refers to the concentration of bis(difluorophosphoryl)imide lithium, which is the additive in the non-aqueous electrolytic solution.

**[Table 10]**

| | Concentration (% by mass) | Capacity retention rate (%) | Amount of iron deposition (µg) | Amount of iron deposition per unit area of negative electrode (µg/cm²) |
|---|---|---|---|---|
| Example 8 | 1.25 | 73.8 | 24 | 1.185 |
| Example 9 | 1.5 | 74.4 | 16 | 0.790 |
| Comparative Example 10 | 0 | 64.5 | 65 | 3.310 |
| Comparative Example 11 | 0.5 | 68.4 | 47 | 2.321 |
| Comparative Example 12 | 1.0 | 72.1 | 35 | 1.728 |

As can be seen from Table 10, even when the positive electrode active material of the non-aqueous electrolytic solution is lithium manganese iron phosphate and the additive is lithium bis(difluorophosphoryl)imide, the amount of iron deposition per unit area of the negative electrode decreases as the concentration of lithium bis(difluorophosphoryl)imide increases. The amount of iron deposition per unit area of the negative electrode in each of the non-aqueous electrolytic solution batteries of Examples 8 and 9 is less than or equal to 1.5 µg/cm². On the other hand, the amount of iron deposition per unit area of the negative electrode in each of the non-aqueous electrolytic solution batteries of Comparative Examples 10 to 12 exceeds 1.5 µg/cm². Further, the capacity retention rate of each of the non-aqueous electrolytic solution batteries of Examples 8 and 9 is higher than that of each of the non-aqueous electrolytic solution batteries of Comparative Examples 10 to 12. Thus, it is assumed that the charge-discharge characteristics of the non-aqueous electrolytic solution batteries of Examples 8 and 9 are improved due to the suppression of iron deposition.

Table 11 shows the results of measuring the capacity retention rate and the amount of iron deposited only on the separator in the high-temperature cycle test for each of the non-aqueous electrolytic solution batteries of Examples 8 and 9 and Comparative Examples 10 to 12.

**[Table 11]**

| | Concentration (% by mass) | Capacity retention rate (%) | Amount of iron deposition (µg) | Amount of iron deposition per unit area of separator (µg/cm²) |
|---|---|---|---|---|
| Example 8 | 1.25 | 73.8 | 9 | 0.36 |
| Example 9 | 1.5 | 74.4 | 6 | 0.24 |
| Comparative Example 10 | 0 | 64.5 | 22 | 0.88 |
| Comparative Example 11 | 0.5 | 68.4 | 17 | 0.68 |
| Comparative Example 12 | 1.0 | 72.1 | 12 | 0.48 |

As can be seen from Table 11, less iron is deposited on the separators of the non-aqueous electrolytic solution batteries of Examples 8 and 9 than on the separators of the non-aqueous electrolytic solution batteries of Comparative Examples 10 to 12.

Table 12 shows the capacity retention rate and the total amount of iron deposited on the negative electrode and separator in the high-temperature cycle test for each of Examples 8 and 9 and Comparative Examples 10 to 12.

**[Table 12]**

| | Concentration (% by mass) | Capacity retention rate (%) | Total amount of iron deposition on negative electrode and separator = Amount of iron elution (µg) | Amount of iron elution per unit area of positive electrode (µg/cm²) |
|---|---|---|---|---|
| Example 8 | 1.25 | 73.8 | 33 | 2.063 |
| Example 9 | 1.5 | 74.4 | 22 | 1.375 |
| Comparative Example 10 | 0 | 64.5 | 87 | 5.438 |
| Comparative Example 11 | 0.5 | 68.4 | 64 | 4,000 |
| Comparative Example 12 | 1.0 | 72.1 | 47 | 2.938 |

As can be seen from Table 12, even when the positive electrode active material of the non-aqueous electrolytic solution is lithium manganese iron phosphate and the additive is lithium bis(difluorophosphoryl)imide, the amount of iron elution per unit area of the positive electrode decreases as the concentration of lithium bis(difluorophosphoryl)imide increases. The amount of iron elution per unit area of the positive electrode in each of the non-aqueous electrolytic solution batteries of Examples 8 and 9 is less than or equal to 2.5 µg/cm². On the other hand, the amount of iron elution per unit area of the positive electrode in each of the non-aqueous electrolytic solution batteries of Comparative Examples 4 to 6 exceeds 2.5 µg/cm². Specifically, the amount of iron eluted in each of the non-aqueous electrolytic solution batteries of Examples 8 and 9 is less than or equal to 1/2 of the amount of iron elution in the non-aqueous electrolytic solution battery of Comparative Example 10, which does not contain lithium bis(difluorophosphoryl)imide. In the non-aqueous electrolytic solution batteries of Examples 8 and 9, it is assumed that the charge-discharge characteristics are improved because iron elution itself is suppressed, resulting in suppression of iron deposition on the negative electrode and separator.

As described above based on Examples, when a non-aqueous electrolytic solution battery contains an additive exceeding 1.0% by mass relative to the total amount of the non-aqueous electrolytic solution, the amount of iron elution from the non-aqueous electrolytic solution battery can be reduced to 1/2, 1/3, or 1/10 or less of the amount of iron elution from a non-aqueous electrolytic solution battery without an additive. In other words, in the non-aqueous electrolytic solution battery according to the present disclosure, iron elution is suppressed, thereby suppressing iron deposition. As a result, the charge-discharge cycle characteristics of the non-aqueous electrolytic solution battery according to the present disclosure are improved.

Within the scope of the ideas in the present disclosure, those skilled in the art will be able to conceive of various modifications and alterations, and it can be also understood that such modifications and alterations are within the scope of the present disclosure. For example, the addition, deletion, or design change of components, or the addition, omission, or condition change of processes as appropriate by those skilled in the art to an embodiment of the present disclosure, is also within the scope of the present disclosure as long as it is provided with the gist of the present disclosure.

## Claims

1. A non-aqueous electrolytic solution for a non-aqueous electrolytic solution battery with a positive electrode containing a positive electrode active material having an olivine structure, comprising:
an electrolyte; and
an additive different from the electrolyte,
wherein the additive is a compound represented by the following general formula (1), and
wherein a concentration of the additive relative to a total amount of the non-aqueous electrolytic solution is greater than 1% by mass. 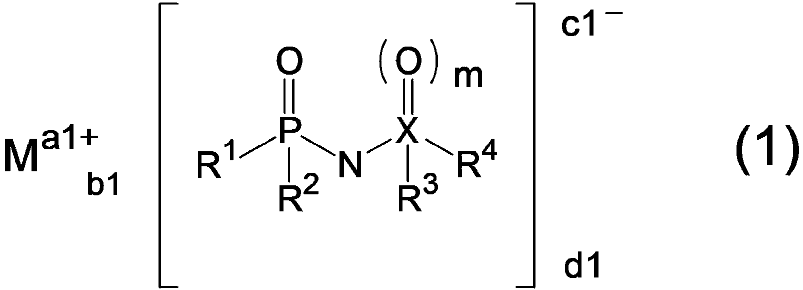 [In the general formula (1), M^{a1+} is an alkali metal cation, an alkaline earth metal cation, or an onium cation, and a1 represents an integer equal to the valency of the corresponding cation. a1 to d1 represent integers from 1 to 2, and satisfy a1 × b1 = c1 × d1. X is a sulfur atom or a phosphorus atom, m is 2 and R⁴ is not present if X is the sulfur atom, and m is 1 if X is the phosphorus atom. R1 to R4 are organic groups each independently selected from a fluorine atom, an oxygen atom, an alkyl group having 1 to 10 carbon atoms, an alkoxy group having 1 to 10 carbon atoms, an alkenyl group having 2 to 10 carbon atoms, an alkenyloxy group having 2 to 10 carbon atoms, an alkynyl group having 2 to 10 carbon atoms, an alkynyloxy group having 2 to 10 carbon atoms, a cycloalkyl group having 3 to 10 carbon atoms, a cycloalkoxy group having 3 to 10 carbon atoms, a cycloalkenyl group having 3 to 10 carbon atoms, a cycloalkenyloxy group having 3 to 10 carbon atoms, an aryl group having 6 to 10 carbon atoms, and an aryloxy group having 6 to 10 carbon atoms, and a fluorine atom, an oxygen atom, or an unsaturated bond can also be present in the organic groups.]

2. The non-aqueous electrolytic solution for a non-aqueous electrolytic solution battery according to claim 1, wherein the concentration of the additive relative to the total amount of the non-aqueous electrolytic solution is less than or equal to 5% by mass.

3. The non-aqueous electrolytic solution for a non-aqueous electrolytic solution battery according to claim 1, wherein the positive electrode active material having the olivine structure is lithium iron phosphate, lithium iron manganese phosphate, sodium iron phosphate, or sodium iron manganese phosphate.

4. The non-aqueous electrolytic solution for a non-aqueous electrolytic solution battery according to claim 1, wherein the additive is at least one selected from the group consisting of a (difluorophosphoryl)(fluorosulfonyl)imide salt and a bis(difluorophosphoryl)imide salt.

5. A non-aqueous electrolytic solution battery, comprising:
a positive electrode containing a positive electrode active material having an olivine structure;
a negative electrode;
a separator between the positive electrode and the negative electrode; and
a non-aqueous electrolytic solution containing an electrolyte and an additive different from the electrolyte,
wherein the additive is a compound represented by the following general formula (1), and
wherein a concentration of the additive relative to a total amount of the non-aqueous electrolytic solution is greater than 1% by mass. 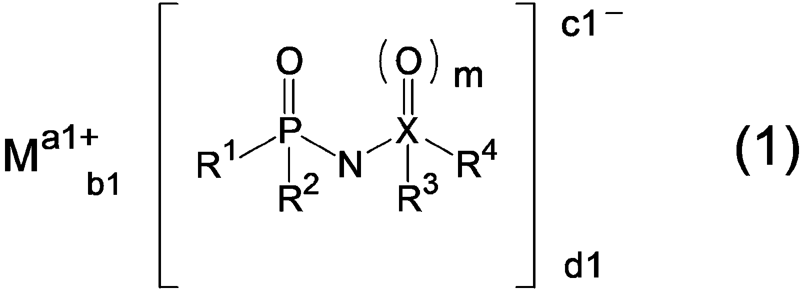 [In the general formula (1), M^{a1+} is an alkali metal cation, an alkaline earth metal cation, or an onium cation, and a1 represents an integer equal to the valency of the corresponding cation. a1 to d1 represent integers from 1 to 2, and satisfy a1 × b1 = c1 × d1. X is a sulfur atom or a phosphorus atom, m is 2 and R⁴ is not present if X is the sulfur atom, and m is 1 if X is the phosphorus atom. R1 to R4 are organic groups each independently selected from a fluorine atom, an oxygen atom, an alkyl group having 1 to 10 carbon atoms, an alkoxy group having 1 to 10 carbon atoms, an alkenyl group having 2 to 10 carbon atoms, an alkenyloxy group having 2 to 10 carbon atoms, an alkynyl group having 2 to 10 carbon atoms, an alkynyloxy group having 2 to 10 carbon atoms, a cycloalkyl group having 3 to 10 carbon atoms, a cycloalkoxy group having 3 to 10 carbon atoms, a cycloalkenyl group having 3 to 10 carbon atoms, a cycloalkenyloxy group having 3 to 10 carbon atoms, an aryl group having 6 to 10 carbon atoms, and an aryloxy group having 6 to 10 carbon atoms, and a fluorine atom, an oxygen atom, or an unsaturated bond can also be present in the organic groups.]

6. The non-aqueous electrolytic solution battery according to claim 5, wherein the concentration of the additive relative to the total amount of the non-aqueous electrolytic solution is less than or equal to 5% by mass.

7. The non-aqueous electrolytic solution battery according to claim 5, wherein the positive electrode active material having the olivine structure is lithium iron phosphate, lithium iron manganese phosphate, sodium iron phosphate, or sodium iron manganese phosphate.

8. The non-aqueous electrolytic solution battery according to claim 5, wherein the additive is at least one selected from the group consisting of a (difluorophosphoryl)(fluorosulfonyl)imide salt and a bis(difluorophosphoryl)imide salt.
